# EUROPEAN PATENT APPLICATION

(11) **EP 4 811 509 A1**
(43) Date of publication of application: **23.09.2026**
(21) Application number: 24833797.4
(22) Date of filing: 04.03.2024
(51) Int. Cl.: H01M 50/15, H01M 50/553, H01M 50/593, H01M 50/186, H01M 50/566, H01M 50/548

(54) **BATTERY CELL AND METHOD FOR MANUFACTURING BATTERY CELL**

(30) Priority: 07.11.2023 KR 20230152514
(71) Applicant: SAMSUNG SDI CO., LTD., Yongin-si, Gyeonggi-do 17084 (KR)
(72) Inventor: LEE, Hyun Soo, Gyeonggi-do, 16678 (KR)
(74) Representative: Gulde & Partner
(86) International application number: PCT/KR2024/002718
(87) International publication number: WO 2025/100644

(57) **Abstract**

The present disclosure relates to a battery cell and a method for manufacturing the battery cell, and is directed to providing a battery cell including a cap plate, a terminal, and an insulator insulating the cap plate and the terminal and firmly coupled to the terminal and the cap plate, and a method for manufacturing the battery cell. To this end, the present disclosure provides a battery cell including an electrode assembly, a cell case in which the electrode assembly is stored and an opening is formed to allow the electrode assembly to enter the cell case, and a cap plate assembly installed on the cell case to close the opening, in which the cap plate assembly includes a cap plate having a first uneven surface in which a plurality of first recesses are formed, a terminal having a second uneven surface in which a plurality of second recesses are formed and which faces the first uneven surface, and a first insulator filling the plurality of first recesses and the plurality of second recesses and interposed between the first uneven surface and the second uneven surface.

## Description

### [Technical Field]

The present disclosure relates to a battery cell and a method for manufacturing the battery cell.

### [Background Art]

In general, as the demand for portable electronic products such as laptops, video cameras, and portable phones rapidly increases and robots, electric vehicles, and the like are commercialized in earnest, research on high-performance secondary batteries capable of repeated charging and discharging is actively underway.

Secondary batteries are widely used for driving or storing energy in small devices such as portable electronic devices, as well as medium to large-sized devices such as electric vehicles and energy storage systems (ESS). In particular, in the case of medium to large-sized devices, one battery module may be constituted by a plurality of prismatic battery cells electrically connected to each other to improve output and/or capacity of a battery.

A prismatic battery cell may include a cell case made of a metal material, an electrode assembly accommodated inside the cell case, and a cap plate assembly including a terminal protruding to the outside of the cell case and a cap plate for closing one open side of the cell case.

The above-described information disclosed in the technology that forms the background of the present disclosure is only intended to improve understanding of the background of the present disclosure, and thus may include information that does not constitute the related art.

### [Disclosure]

### [Technical Problem]

The present invention is directed to providing a battery cell including a cap plate, a terminal, and an insulator insulating the cap plate and the terminal and firmly coupled to the terminal and the cap plate, and a method for manufacturing the battery cell.

However, the technical problems to be solved by the present invention are not limited to the problems described above, and other problems not mentioned can be clearly understood by those skilled in the art from the explanation of the invention described below.

### [Technical Solution]

To solve the above technical problem, a battery cell according to an embodiment of the present invention includes an electrode assembly, a cell case in which the electrode assembly is stored and an opening is formed to allow the electrode assembly to enter the cell case, and a cap plate assembly installed on the cell case to close the opening, in which the cap plate assembly includes a cap plate having a first uneven surface in which a plurality of first recesses are formed, a terminal having a second uneven surface in which a plurality of second recesses are formed and which faces the first uneven surface, and a first insulator filling the plurality of first recesses and the plurality of second recesses and interposed between the first uneven surface and the second uneven surface.

A size of an inner diameter of an entrance of each of the first recesses may be smaller than a size of the greatest inner diameter among sizes of inner diameters of parts other than the entrance of the first recess, and a size of an inner diameter of an entrance of each of the second recesses may be smaller than a size of the greatest inner diameter among sizes of inner diameters of parts other than the entrance of the second recess.

The first insulator may include a plurality of first hook protrusions formed by filling interiors of the plurality of first recesses with molten synthetic resin and curing the synthetic resin and a plurality of second hook protrusions formed by filling interiors of the plurality of second recesses with molten synthetic resin and curing the synthetic resin.

A plurality of fine recesses may be formed in at least one of the first uneven surface and the second uneven surface by laser irradiation, and the first insulator may include a plurality of fine protrusions formed by filling interiors of the plurality of fine recesses with molten synthetic resin and curing the synthetic resin.

A first through hole may be formed in the cap plate, a second through hole aligned with the first through hole may be formed in the terminal, and the cap plate assembly may further include a coupling protrusion electrically coupled to the terminal through the first through hole and the second through hole, a current collector disposed on a side opposite to the terminal with the cap plate therebetween and electrically coupled to the coupling protrusion, and a second insulator interposed between the cap plate and the current collector.

The cap plate assembly may further include a gasket covering an inner peripheral surface of the first through hole and coming into elastic close contact with the inner peripheral surface of the first through hole.

The coupling protrusion and the terminal may be coupled by welding.

The coupling protrusion may include a pillar portion extending from the current collector toward the terminal with a constant diameter and a joint portion positioned farther from the current collector than the pillar portion and tapered so that a diameter thereof becomes smaller as a distance from the current collector increases, and the joint portion may be welded to the terminal.

The second through hole may be tapered so that a size of an inner diameter thereof becomes smaller as a distance from the cap plate increases, and a size of an inclination angle of the tapered joint portion and a size of an inclination angle of the tapered second through hole may be the same.

The coupling protrusion may further include an assembly portion tapered so that a diameter thereof becomes smaller as a distance from the current collector increases between the pillar portion and the joint portion and a size of an inclination angle of the tapered joint portion is greater than a size of an inclination angle of the tapered assembly portion.

A pair of terminals may be provided to be spaced apart from each other along a longitudinal direction of the cap plate and a pair of insulators may be provided in a one-to-one correspondence with the pair of terminals.

A pair of openings may be provided to open in opposite directions in the cell case and a pair of cap plate assemblies may be provided in a one-to-one correspondence with the pair of openings.

A pair of terminals may be provided to be spaced apart from each other along a longitudinal direction of the cap plate and a pair of first insulators may be provided in a one-to-one correspondence with the pair of terminals.

According to another aspect of the present invention, there is provided a method for manufacturing a battery cell, the method including manufacturing a cap plate assembly, inserting an electrode assembly into a cell case through an opening formed in the cell case, and installing the cap plate assembly on the cell case to close the opening, in which the manufacturing of the cap plate assembly includes preparing a cap plate having a first uneven surface in which a plurality of first recesses are formed, preparing a terminal having a second uneven surface in which a plurality of second recesses are formed, setting the cap plate and the terminal by inserting and fixing the cap plate and the terminal into an injection molding die so that the first uneven surface and the second uneven surface are disposed to face each other inside the injection molding die, molding a first insulator filling the plurality of first recesses and the plurality of second recesses and interposed between the first uneven surface and the second uneven surface by injecting molten synthetic resin into the injection molding die and curing the synthetic resin, and removing the cap plate assembly including the cap plate, the terminal, and the first insulator from the injection molding die.

The preparing of the cap plate may include forming a plurality of first basic grooves with a constant inner diameter from an entrance to a bottom in a surface of the cap plate by press machining and forming a first undercut by pressing a periphery of the entrance of each of the plurality of first basic grooves so that a size of the inner diameter of the entrance of each of the plurality of first basic grooves is smaller than a size of an inner diameter of a part other than the entrance of each of the plurality of first basic grooves.

The preparing of the terminal may include forming a plurality of second basic grooves with a constant diameter from an entrance to a bottom in a surface of the terminal by press machining and forming a second undercut by pressing a periphery of the entrance of each of the plurality of second basic grooves so that a size of the inner diameter of the entrance of each of the plurality of second basic groove is smaller than a size of an inner diameter of a part other than the entrance of each of the plurality of second basic groove.

The manufacturing of the cap plate assembly may further include forming a plurality of fine recesses by emitting a laser to at least one of the first uneven surface and the second uneven surface, and in the molding of the insulator, the first insulator may be formed to fill the plurality of fine recesses.

The manufacturing of the cap plate assembly may further include inserting a coupling protrusion to pass through the cap plate and the terminal and welding the coupling protrusion and the terminal and welding a current collector to the coupling protrusion prior to welding the coupling protrusion and the terminal.

In the molding of the insulator, a second insulator disposed to be spaced apart from the first insulator with the cap plate therebetween may be formed together with the first insulator.

The manufacturing of the cap plate assembly may further include installing a gasket on the cap plate prior to the setting of the cap plate and the terminal, and in the molding of the insulator, the first insulator may be formed to be attached to one side of the gasket, and the second insulator is formed to be attached to the other side of the gasket.

### [Advantageous Effects]

According to an embodiment of the present invention, a first insulator can be firmly coupled to a cap plate and a terminal, and a cap plate assembly including the cap plate, the terminal, and first insulator can be easily manufactured by an insert injection molding method. Accordingly, productivity of a battery cell including the cap plate assembly can be improved and costs thereof can be reduced.

In addition, electrical resistance between an electrode assembly and the terminal may be reduced, and thus power loss of the battery cell can be reduced and energy efficiency thereof can be improved.

However, the effects that can be obtained through the present invention are not limited to the effects described above, and other technical effects not mentioned can be clearly understood by those skilled in the art from the explanation of the invention described below.

### [Description of Drawings]

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view of a battery cell according to a first embodiment of the present disclosure;
FIG. 2 is a cross-sectional view taken along line II-II in FIG. 1;
FIG. 3 is an enlarged cross-sectional view illustrating a cap plate assembly of FIG. 2;
FIG. 4 is a block diagram illustrating a battery cell assembly manufacturing method according to one embodiment of the present disclosure;
FIG. 5 is a block diagram illustrating an operation of manufacturing a cap plate assembly in FIG. 4;
FIG. 6 is a cross-sectional view for describing an operation of machining first basic grooves or an operation of machining second basic grooves in FIG. 5;
FIG. 7 is a cross-sectional view for describing an operation of forming a first undercut or an operation of forming a second undercut in FIG. 5;
FIG. 8 is a cross-sectional view for describing an operation of forming a fine recess in FIG. 5;
FIG. 9 is a cross-sectional view for describing an operation of joining a coupling protrusion and a current collector in FIG. 5;
FIG. 10 is a cross-sectional view for describing an operation of joining the coupling protrusion and a terminal in FIG. 5;
FIG. 11 is a perspective view of a battery cell according to a second embodiment of the present disclosure; and
FIG. 12 is a cross-sectional view taken along line XI-XI in FIG. 11.

### [Modes of the Invention]

Preferred embodiments of the present invention are explained in detail by referring to the attached drawing below. Prior to this, terms or words used in this specification and the scope of the claim shall not be interpreted in a conventional or dictionary sense, and the inventor must be interpreted with a meaning and concept in line with the technical ideas of the present invention based on the principle that the concept of terms can be appropriately defined in order to explain his own invention in the best way. Therefore, since the embodiments described in this specification and the configurations shown in the drawing are only some of the most desirable embodiments of the present invention and do not represent all of the technical ideas of the present invention, it is important to understand that there may be various equalities and variants that can replace them at the time of this application.

Also, when used in this specification, "include (include)" and/or "include (include)" specify the presence of the mentioned shapes, numbers, steps, actions, parts, elements, and/or groups of these, and does not exclude the presence or addition of one or more other shapes, numbers, actions, elements and/or groups.

Also, in order to facilitate understanding of the invention, the attached drawing may not be shown according to the actual scale, but the dimensions of some components may be exaggerated. Also, the same reference number can be assigned to the same component in different embodiments.

The statement that the two comparison targets are "the same" means that they are "substantially the same." Therefore, actual equality may include deviations that are considered to be low in the industry, for example, cases with deviations within 5%. Also, when a parameter is uniform in a given area, it can mean that it is uniform from an average point of view.

Although first, second, etc. are used to describe various components, of course, these components are not limited by these terms. These terms are used only to distinguish one component from another; of course, the first component may be the second component unless there is a particularly opposite description.

Throughout the specification, each component may be singular or plural, unless specifically stated to the contrary.

The placement of any configuration "above (or below)" of a component or "above (or below)" of a component may mean that any configuration is not only arranged in contact with the top (or bottom) of the component, but also that other configurations may be interposed between the component and any configuration arranged on (or below) the component.

Also, when it is described that a component is "connected", "connected", or "connected" to another component, the components may be directly connected or tangential to each other, but it should be understood that other components are "interposed" between each component, and that each component may also be "connected", "connected", or "connected" through other components. Also, when a part is electrically connected (electrically connected) to another part, this includes not only cases where it is directly connected, but also cases where other devices are connected in between.

When "A and/or B" is used throughout the specification, this means A, B, or A and B, unless otherwise stated otherwise. In other words, "and/or" includes all or any combination of the multiple items listed. When "C to D," is stated, this means C or higher and D or less, unless otherwise stated otherwise.

The terms used in this specification are intended to describe embodiments of this disclosure and are not intended to limit this disclosure.

In exemplary embodiments of a [cylindrical, prismatic, pouch] battery according to an embodiment of the present disclosure, the battery selected by selecting one of the prismatic/pouch/ cylindrical batteries is described as having a general structure, and in the case of commonly applied technology, the general structure of a prismatic/pouch/cylindrical battery is described.

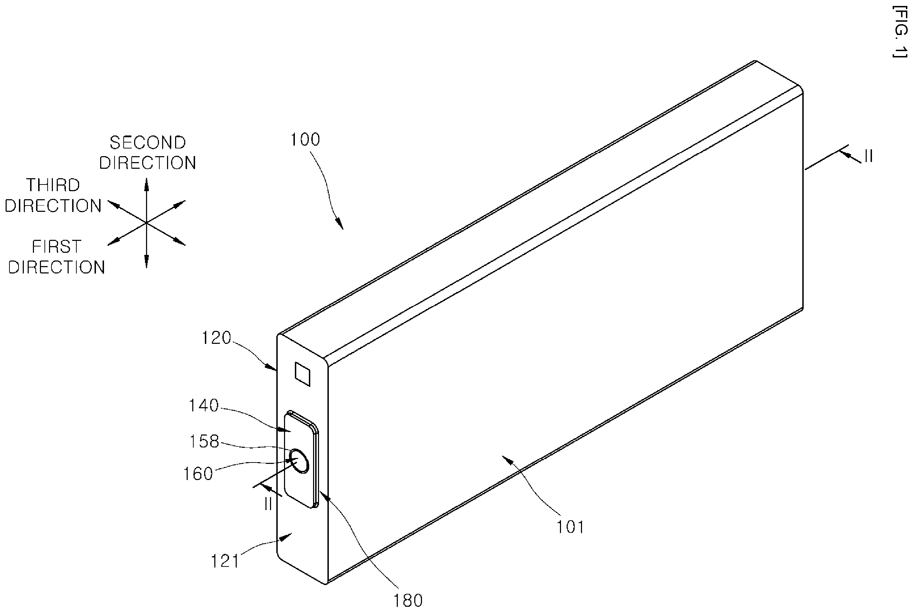

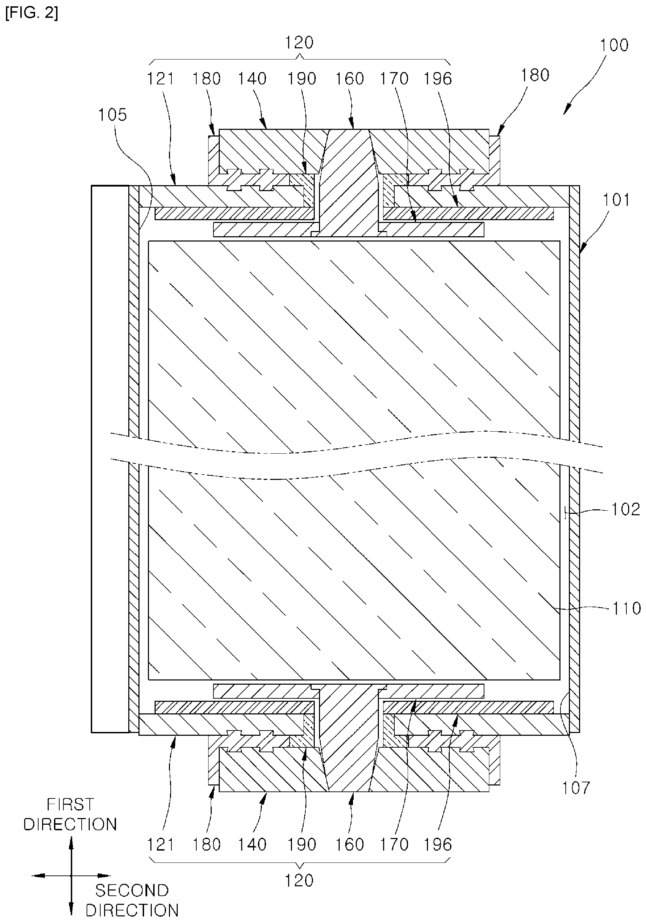

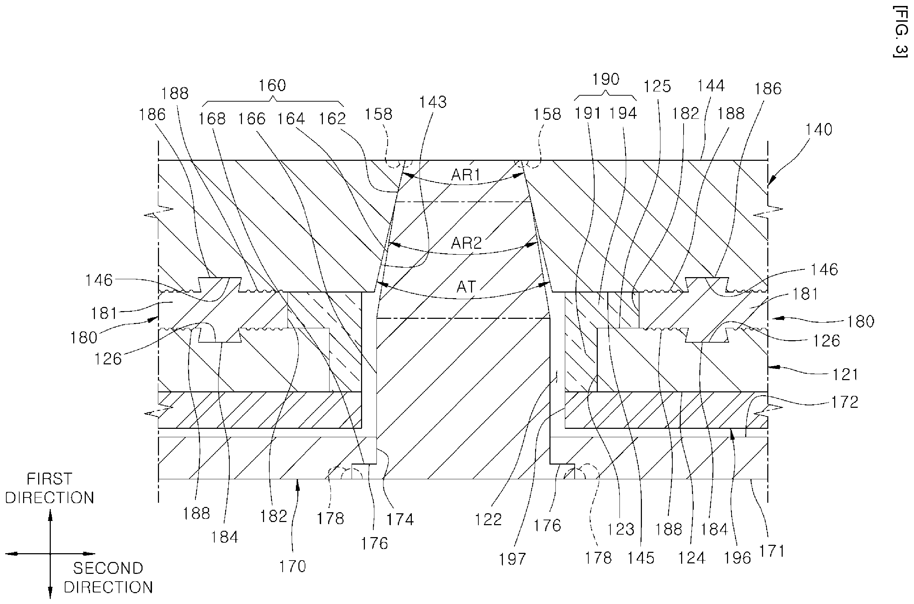

FIG. 1 is a perspective view of a battery cell according to a first embodiment of the present invention, FIG. 2 is a cross-sectional view taken along line II-II in FIG. 1, and FIG. 3 is an enlarged cross-sectional view illustrating a cap plate assembly of FIG. 2. Referring to FIGS. 1 to 3, a battery cell 100 according to one embodiment of the present invention includes a cell case 101, an electrode assembly 110, and a cap plate assembly 120. The battery cell 100 may be a so called "side type prismatic battery cell in which a pair of terminals 140 joined to a bus bar (not illustrated), that is, positive and negative terminals 140 are disposed on one side and the other side of the cell case 101.

The cell case 101 is made of a metal material, for example, aluminum alloy, and may be formed in an approximately rectangular parallelepiped shape. An internal space 102 in which the electrode assembly 110 is stored may be formed inside the cell case 101. A first opening 105 and a second opening 107 that are open in a first direction may be formed on one side and the other side of the cell case 101.

The electrode assembly 110 may be accommodated inside the cell case 101. The electrode assembly 110 may enter the internal space 102 of the cell case 101 through the first opening 105 or the second opening 107. The electrode assembly 110 may be formed by winding or stacking a stack of a first electrode plate, a separator, and a second electrode plate, which are formed in a thin plate or film shape.

When the electrode assembly 110 is a wound stack, a winding axis may be parallel to a longitudinal direction of the cell case 101. In addition, the electrode assembly 110 may be of stack-type rather than wound-type, and the shape of the electrode assembly 110 is not limited in the present invention. In addition, the electrode assembly 110 may be a Z-stack electrode assembly 110 in which positive and negative electrode plates are inserted into both sides of a separator bent into a Z-stack. In addition, the electrode assembly 110 may be stored inside the case in which one or more electrode assemblies 110 are stacked so that their long sides are adjacent to each other, and the number of electrode assemblies 110 is not limited in the present invention. The first electrode plate of the electrode assembly 110 may serve as a negative electrode, and the second electrode plate may serve as a positive electrode. Of course, the opposite is also possible.

The first electrode plate may be formed by coating a first electrode current collector plate made of a metal foil such as copper, copper alloy, nickel or nickel alloy with a first electrode active material such as graphite, carbon, or the like, and may include a first electrode tab (or a first uncoated portion) that is a region that is not coated with the first electrode active material. The first electrode tab may serve as a path for current flow between the first electrode plate and a first current collector. In some examples, the first electrode tab may be formed in advance by cutting the first electrode plate so that the first electrode tab protrudes to one side when the first electrode plate is manufactured, and may protrude further to one side than the separator without separate cutting.

The second electrode plate may be formed by coating a second electrode current collector plate made of a metal foil such as aluminum or aluminum alloy with a second electrode active material such as a transition metal oxide and the like, and may include a second electrode tap (or a second uncoated portion) that is a region that is not coated with the second electrode active material. The second electrode tab may serve as a path for current flow between the second electrode plate and a second current collector. In some examples, the second electrode tab may be formed in advance by cutting the second electrode plate so that the second electrode tab protrudes to the other side when the second electrode plate is manufactured, and may protrude further to the other side than the separator without separate cutting.

In some examples, the first electrode tab may be positioned on a side of a left end of the electrode assembly 110, and the second electrode tab may be positioned on a side of a right end of the electrode assembly 110, or on one side in the same direction. Here, "left" and "right" are for convenience of description, and the positions may change when the battery cell 12 rotates left or right or up and down. In some examples, the electrode assembly 110 may be accommodated in the case together with an electrolyte.

A pair of cap plate assemblies 120 may be provided to correspond to the first opening 105 and the second opening 107 of the cell case 101. In other words, one cap plate assembly 120 of the pair of cap plate assemblies 120 may be installed on the cell case 101 to close the first opening 105, and the other cap plate assembly 120 thereof may be installed on the cell case 101 to close the second opening 107.

Each cap plate assembly 120 includes a cap plate 121, a terminal 140, and a first insulator 180. The cap plate 121 closes one of the first opening 105 and the second opening 107. An outer edge of the cap plate 121 may be welded to an inner surface of one of the first opening 105 and the second opening 107 of the cell case 101.

The cap plate 121 has a first uneven surface 125 in which a plurality of first recesses 126 are formed. The cap plate 121 may be a plate-shaped member whose planar shape is approximately rectangular and may extend in a second direction perpendicular to the first direction. A cap plate through hole 122 passing through the cap plate 121 in a thickness direction is formed in the cap plate 121.

Referring to FIGS. 1 to 3 and FIG. 8, the cap plate 121 may include one side 124 facing the inside of the cell case 101, or in other words, the electrode assembly 110, and the other side 125 facing the outside of the cell case 101. A plurality of first recesses 126 and a plurality of fine recesses 132 may be formed on the other side 125. Accordingly, hereinafter, the other side 125 of the cap plate 121 will be referred to as the first uneven surface.

A size of an inner diameter CI of an entrance 128 of each of the first recesses 126 may be smaller than a size of the greatest inner diameter CH among sizes of inner diameters of parts other than the entrance 128 of the first recess 126. A size of an inner diameter of the fine recess 132 is smaller than the size of the inner diameter CI of the entrance 128 of the first recess 126.

The terminal 140 may be made of a conductive metal material. The terminal 140 has a second uneven surface 145 in which a plurality of second recesses 146 are formed. The terminal 140 has a substantially rectangular parallelepiped shape, and a terminal through hole 143 passing through the terminal 140 in a thickness direction, that is, in the first direction, is formed in the terminal 140. The terminal through hole 143 and the cap plate through hole 122 may be aligned along an imaginary straight line parallel to the first direction.

The terminal 140 may include one side 145 facing the cap plate 121 and the other side 144 opposite to the one side 145. A bus bar (not illustrated) may be joined to the other side 144. A plurality of second recesses 146 and a plurality of fine recesses 152 may be formed on the one side 145. Accordingly, hereinafter, the one side 145 of the terminal 140 will be referred to as the second uneven surface. The second uneven surface 145 may be disposed to face the first uneven surface 125.

A size of an inner diameter TI of an entrance 148 of each of the second recesses 146 may be smaller than a size of the greatest inner diameter TH among sizes of inner diameters of parts other than the entrance 148 of the second recess 146. A size of an inner diameter of the fine recess 152 is smaller than the size of the inner diameter TI of the entrance 148 of the second recess 146.

The first insulator 180 fills the plurality of first recesses 126 and the plurality of second recesses 146 and is interposed between the first uneven surface 125 and the second uneven surface 145. The first insulator 180 may be made of an insulating material such as synthetic resin, for example. The first insulator 180 may include a body 181, a plurality of first hook protrusions 184, a plurality of second hook protrusions 186, and a plurality of fine protrusions 188.

The body 181 has a thickness corresponding to a gap between the first uneven surface 125 and the second uneven surface 145. The body 181 may include a portion extending along the first direction to cover an outer surface of the terminal 140.

The plurality of first hook protrusions 184 may be formed by filling interiors of the plurality of first recesses 126 with molten synthetic resin and curing the synthetic resin. Accordingly, the plurality of first hook protrusions 184 may be firmly joined to inner surfaces of the plurality of first recesses 126, and the first insulator 180 may be firmly joined to the cap plate 121.

As described above, when the size of the inner diameter CI of the entrance 128 of the first recess 126 is smaller than the size of the greatest inner diameter CH among the sizes of the inner diameters of the parts other than the entrance 128 of the first recess 126, due to a first undercut 129 generated around the entrance 128 of the first recess 126, the first hook protrusion 184 is not possible to be separated from or come out of the first recess 126. Accordingly, the first insulator 180 may be more firmly joined to the cap plate 121.

The plurality of second hook protrusions 186 may be formed by filling interiors of the plurality of second recesses 146 with molten synthetic resin and curing the synthetic resin. Accordingly, the plurality of second hook protrusions 186 may be firmly joined to inner surfaces of the plurality of second recesses 146, and the first insulator 180 may be firmly joined to the terminal 140.

As described above, when the size of the inner diameter TI of the entrance 148 of the second recess 146 is smaller than the size of the greatest inner diameter TH among the sizes of the inner diameters of the parts other than the entrance 148 of the second recess 146, due to a second undercut 149 generated around the entrance 148 of the second recess 146, the second hook protrusion 186 is not possible to be separated from or come out of the second recess 146. Accordingly, the first insulator 180 may be more firmly joined to the terminal 140.

The plurality of fine protrusions 188 may be formed by filling interiors of the plurality of fine recesses 132 and 152 with molten synthetic resin and curing the synthetic resin. Accordingly, the plurality of fine protrusions 188 may be firmly joined to inner surfaces of the plurality of fine recesses 132 and 152, and the first insulator 180 may be more firmly joined to the cap plate 121 and the terminal 140.

Referring to FIGS. 1 to 3, 9, and 10, the cap plate assembly 120 may further include a coupling protrusion 160, a current collector 170, a gasket 190, and a second insulator 196. The coupling protrusion 160 may pass through the cap plate through hole 122 and the terminal through hole 143 and be electrically coupled to the terminal 140. The coupling protrusion 160 may be made of a conductive metal material.

The current collector 170 may be disposed on the side opposite to the terminal 140 with the cap plate 121 interposed therebetween, and may be electrically coupled to the coupling protrusion 160. The current collector 170 may be made of a conductive metal material. The current collector 170 is a plate-shaped member with a substantially square planar shape, and may extend in the second direction.

The coupling protrusion 160 may extend along the first direction. The coupling protrusion 160 may include a joint portion 162, an assembly portion 164, a pillar portion 166, and a flange portion 168. The pillar portion 166 extends in a direction from the current collector 170 toward the terminal 140. A size of a diameter of the pillar portion 166 is constant along the first direction.

The joint portion 162 is positioned farther from the current collector 170 than the pillar portion 166. The joint portion 162 is tapered so that a diameter thereof becomes smaller as the distance from the current collector 170 increases. The joint portion 162 may be coupled to the terminal 140 by welding, such as laser welding, for example.

The assembly portion 164 is positioned between the pillar portion 166 and the joint portion 162. The assembly portion 164 is tapered so that a diameter thereof becomes smaller as the distance from the current collector 170 increases. The flange portion 168 protrudes from an outer peripheral surface of the pillar portion 166 in a radial direction perpendicular to the first direction. The flange portion 168 protrudes stepwise from the pillar portion 166, and a diameter of the flange portion 168 is greater than the diameter of the pillar portion 166.

The terminal through hole 143 of the terminal 140 may be tapered so that a size of an inner diameter thereof becomes smaller as the distance from the cap plate 121 increases to correspond to the joint portion 162. A size of an inclination angle AR1 of the tapered joint portion 162 and a size of an inclination angle AT of the tapered terminal through hole 143 may be the same.

When the joint portion 162 is aligned with the cap plate through hole 122 and the terminal through hole 143 and inserted into the terminal through hole 143 through the cap plate through hole 122, an outer peripheral surface of the joint portion 162 and an inner peripheral surface of the terminal through hole 143 come into surface contact, and the joint portion 162 may not come out across the terminal through hole 143. In this way, welding of the coupling protrusion 160 and the terminal 140 may become easier due to the tapered joint portion 162 and the tapered terminal through hole 143.

The size of the inclination angle AR1 of the tapered joint portion 162 may be greater than a size of an inclination angle AR2 of the tapered assembly portion 164. In other words, the size of the inclination angle AR2 of the assembly portion 164 may be smaller than the size of the inclination angle AR1 of the joint portion 162. For example, the inclination angle AR1 of the joint portion 162 may be 8° to 10°, and the inclination angle AR2 of the assembly portion 164 may be 6° to 7°.

When the size of the inclination angle AR2 of the assembly portion 164 is greater than the size of the inclination angle AR1 of the joint portion 162, the outer peripheral surface of the joint portion 162 may not be in surface contact with the inner peripheral surface of the terminal through hole 143. In addition, when the size of the inclination angle AR2 of the assembly portion 164 is the same as the size of the inclination angle AR1 of the joint portion 162, even if there is a slight machining error, the outer peripheral surface of the joint portion 162 may not be in surface contact with the inner peripheral surface of the terminal through hole 143.

When a laser beam is emitted along an edge of the outer circumferential surface of the joint portion 162 and an edge of the inner peripheral surface of the terminal through hole 143 of the terminal 140 in a state in which the joint portion 162 is in surface contact with the inner peripheral surface of the terminal through hole 143, an annular weld portion 158 may be formed and thus the coupling protrusion 160 and the terminal 140 may be welded.

A current collector through hole 174 passing through the current collector 170 in a thickness direction is formed in the current collector 170. A size of an inner diameter of the current collector through hole 174 is greater than or equal to the diameter of the pillar portion 166 of the coupling protrusion 160 and is smaller than the diameter of the flange portion 168. The current collector 170 has one side 171 facing the electrode assembly 110 and the other side 172 facing the cap plate 121 as a side opposite to the one side 171.

An annular groove 176 is formed on the one side 171 of the current collector 170 in a stepped annular shape so that the flange portion 168 is seated. When the coupling protrusion 160 is inserted into the current collector through hole 174 so that the flange portion 168 of the coupling protrusion 160 is seated in the annular groove 176 and a laser beam is emitted along an edge of an outer peripheral surface of the flange portion 168 and an edge of the inner peripheral surface of the annular groove 176, an annular weld portion 178 may be formed and thus the coupling protrusion 160 and the current collector 170 may be welded.

Referring to FIGS. 1 to 3, the gasket 190 may cover an inner peripheral surface 123 of the cap plate through hole 122 and may come into elastic close contact with the inner peripheral surface 123 of the cap plate through hole 122. The gasket 190 may be made of an elastic material with insulating properties. The gasket 190 may include a tubular gasket pipe portion 191 extending in the first direction, and a gasket flange portion 194 extending in a radial direction so that a diameter of the gasket pipe portion 191 increases.

One end of the gasket pipe portion 191 may be attached to the second insulator 196, and the other end may be connected to the gasket flange portion 194. An outer peripheral surface of the gasket flange portion 194 may be in close contact with the body 181 of the first insulator 180.

One side of the gasket flange portion 194 may be in close contact with a portion of the first uneven surface 125 that is not covered by the first insulator 180, and the other side of the gasket flange portion 194 may be in close contact with a portion of the second uneven surface 145 that is not covered by the first insulator 180. An end of the gasket flange portion 194 that is furthest from the coupling protrusion 160 may be attached to the first insulator 180.

The second insulator 196 is interposed between the cap plate 121 and the current collector 170 to insulate the cap plate 121 and the current collector 170. The second insulator 196 may be made of an insulating material such as synthetic resin, for example.

The current collector 170 included in the cap plate assembly 120 closing the first opening 105 may be electrically connected to the uncoated portion of one of the first electrode plate and the second electrode plate of the electrode assembly 110, and the current collector 170 included in the cap plate assembly 120 closing the second opening 107 may be electrically connected to the uncoated portion of the other one of the first electrode plate and the second electrode plate of the electrode assembly 110.

The current collector 170 may be directly electrically connected to the uncoated portion by a method such as welding or may be electrically connected to the uncoated portion via a sub plate (not illustrated).

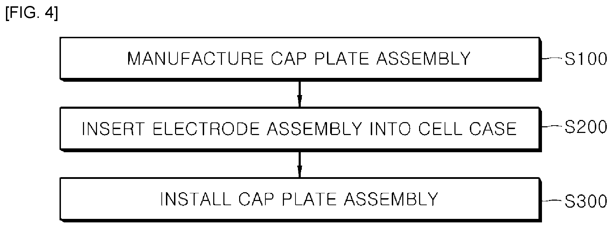

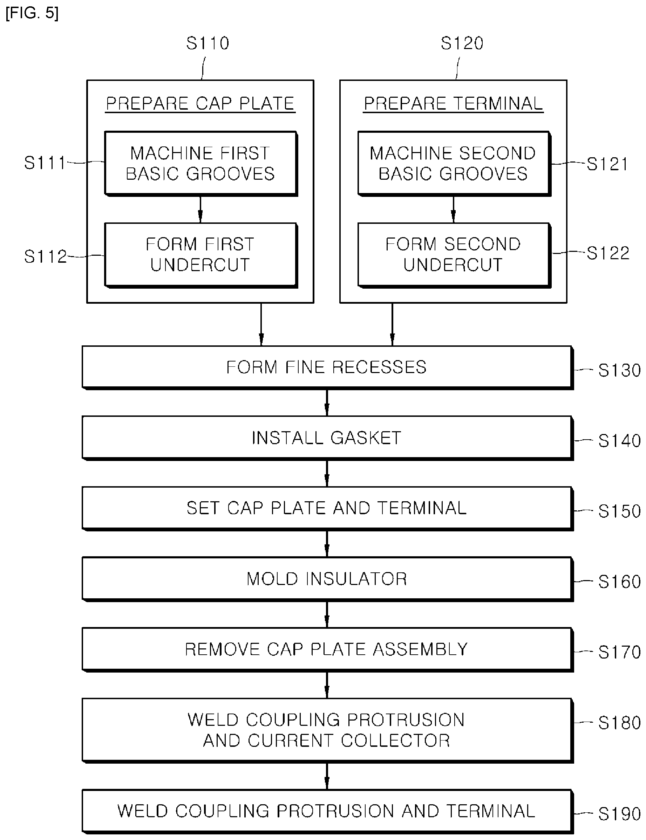

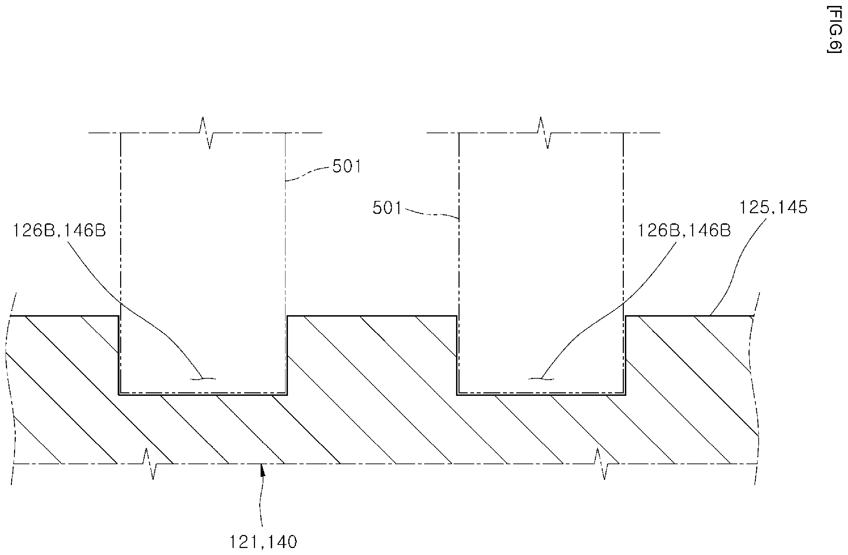

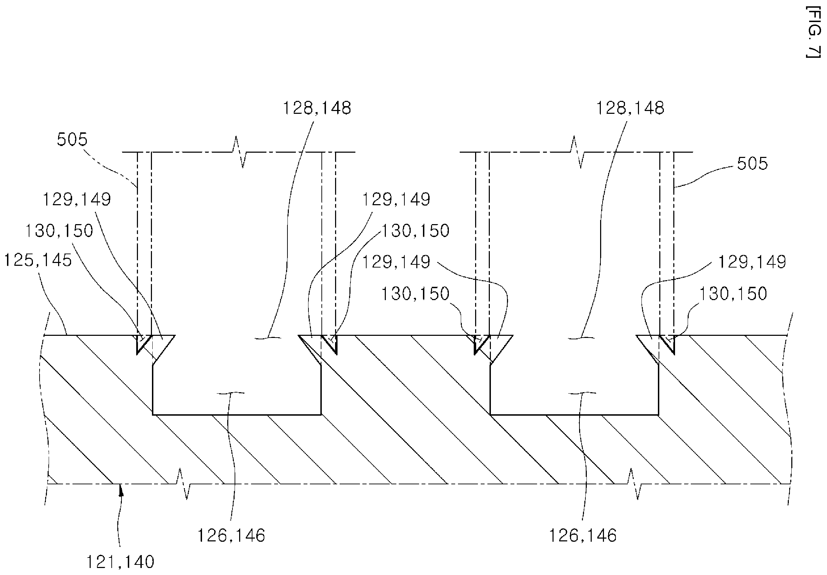

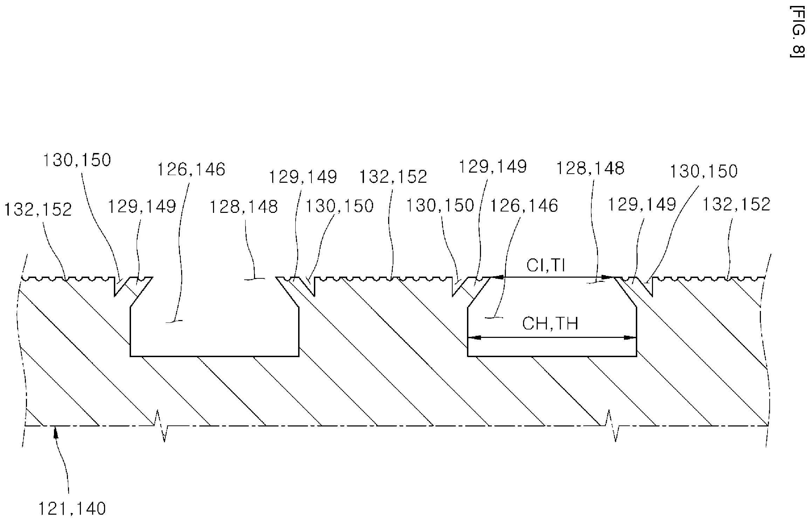

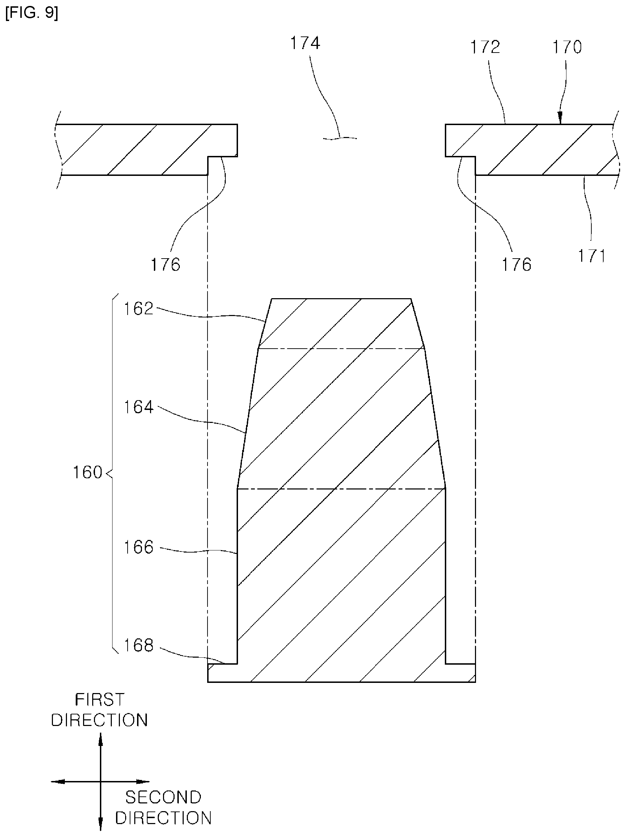

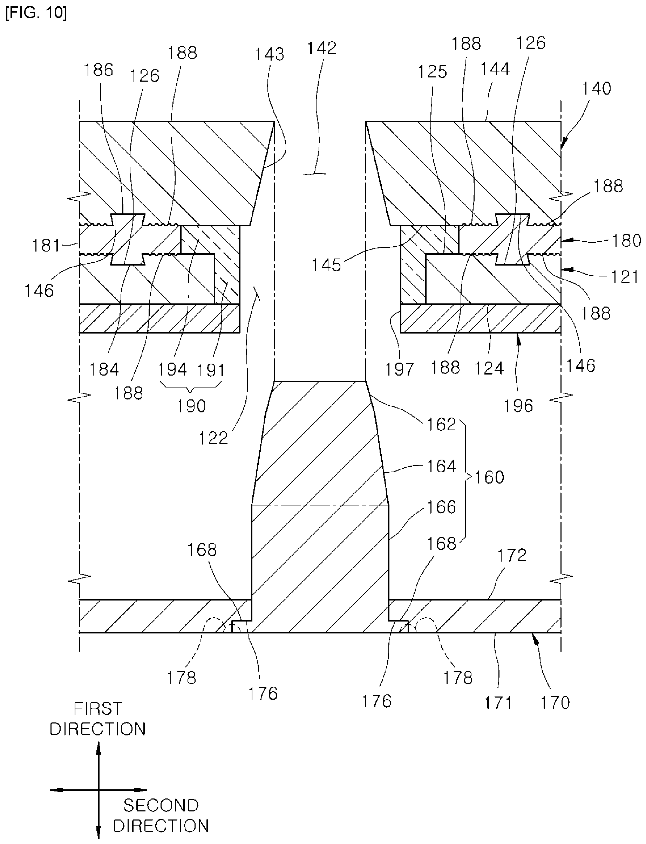

FIG. 4 is a block diagram illustrating a method for manufacturing a battery cell assembly according to one embodiment of the present invention, FIG. 5 is a block diagram illustrating an operation of manufacturing a cap plate assembly in FIG. 4, FIG. 6 is a cross-sectional view for describing an operation of machining first basic grooves or an operation of machining second basic grooves in FIG. 5, FIG. 7 is a cross-sectional view for describing an operation of forming a first undercut or an operation of forming a second undercut in FIG. 5, FIG. 8 is a cross-sectional view for describing an operation of forming a fine recess in FIG. 5, FIG. 9 is a cross-sectional view for describing an operation of joining a coupling protrusion and a current collector in FIG. 5, and FIG. 10 is a cross-sectional view for describing an operation of joining the coupling protrusion and a terminal in FIG. 5.

Referring to FIGS. 1 to 10, the method for manufacturing a battery cell according to one embodiment of the present invention includes an operation of manufacturing a cap plate assembly (S100), an operation of inserting an electrode assembly into a cell case (S200), and an operation of installing the cap plate assembly (S300).

The operation of manufacturing a cap plate assembly (S100) includes, as an operation of manufacturing the cap plate assembly 120, an operation of preparing a cap plate (S110), an operation of preparing a terminal (S120), an operation of setting the cap plate and the terminal (S150), an operation of molding an insulator (S160), and an operation of removing the cap plate assembly (S170).

The operation of preparing a cap plate (S110) is an operation of preparing the cap plate 121 having the first uneven surface 125 in which the plurality of first recesses 126 are formed. The operation of preparing a cap plate (S110) may include an operation of machining first basic grooves (S111) and an operation of forming a first undercut (S112) to form the plurality of first recesses 126.

Referring to FIG. 6, the operation of machining first basic grooves (S111) is an operation of forming a plurality of first basic grooves 126B with a constant inner diameter from an entrance to a bottom in the surface of the cap plate 121, specifically the first uneven surface 125 by press machining. For example, the plurality of first basic grooves 126B may be machined using a press mold equipped with a plurality of first punches 501 having a substantially cylindrical shape.

Referring to FIGS. 6 to 8, the operation of forming a first undercut (S112) is an operation of forming the first undercut 129 by pressing a periphery of the entrance of each of the plurality of first basic grooves 126B so that a size of the inner diameter of the entrance of each of the plurality of first basic grooves 126B is smaller than a size of an inner diameter of a part other than the entrance of each of the plurality of first basic grooves 126B.

Through the operation of forming a first undercut (S112), the first recess 126 in which the size of the inner diameter CI of the entrance 128 is smaller than the size of the inner diameter CH of a part other than the entrance 128 may be formed.

The first undercut 129 may be formed by press machining. For example, the first undercut 129 may be formed by pressing the periphery of the entrance of the first basic groove 126B using a press mold equipped with a plurality of tubular second punches 505 each having an inner diameter slightly greater than the diameter of the cylindrical first punch 501. As an end of each of the second punches 505 presses the first uneven surface 125, an annular groove 130 may be formed in the first uneven surface 125.

Referring to FIGS. 3 to 10, the operation of preparing a terminal (S120) is an operation of preparing the terminal 140 having the second uneven surface 145 in which the plurality of second recesses 146 are formed. The operation of preparing a terminal (S120) may include an operation of machining second basic grooves (S121) and an operation of forming a second undercut (S122) to form the plurality of second recesses 146.

Referring to FIG. 6, the operation of machining second basic grooves (S121) is an operation of forming a plurality of second basic grooves 146B with a constant inner diameter from an entrance to a bottom in the surface of the terminal 141, specifically the second uneven surface 145 by press machining. For example, the plurality of second basic grooves 146B may be machined using a press mold equipped with the plurality of first punches 501 having a substantially cylindrical shape.

Referring to FIGS. 6 to 8, the operation of forming a second undercut (S122) is an operation of forming the second undercut 149 by pressing a periphery of the entrance of each of the plurality of second basic grooves 146B so that a size of the inner diameter of the entrance of each of the plurality of second basic grooves 146B is smaller than a size of an inner diameter of a part other than the entrance of each of the plurality of second basic grooves 146B.

Through the operation of forming a second undercut (S122), the second recess 146 in which the size of the inner diameter TI of the entrance 148 is smaller than the size of the inner diameter TH of a part other than the entrance 148 may be formed.

The second undercut 149 may be formed by press machining. For example, the second undercut 149 may be formed by pressing the periphery of the entrance of the second basic groove 146B using a press mold equipped with a plurality of tubular second punches 505 each having an inner diameter slightly greater than the diameter of the cylindrical first punch 501. As an end of each of the second punches 505 presses the second uneven surface 145, an annular groove 150 may be formed in the second uneven surface 145.

The operation of manufacturing a cap plate assembly (S100) may further include an operation of forming fine recesses (S130). The operation of forming fine recesses (S130) is an operation of forming a plurality of fine recesses 132 and 152 as illustrated in FIG. 8 by emitting a laser beam to at least one of the first uneven surface 125 and the second uneven surface 145.

The operation of setting the cap plate and the terminal (S150) is an operation of inserting and fixing the cap plate 121 and the terminal 140 into an injection molding die (not illustrated) so that the first uneven surface 125 and the second uneven surface 145 are disposed to face each other inside the injection molding die.

More specifically, the injection molding die includes an upper molding die and a lower molding die that form a cavity therebetween when they are brought into close contact. When the upper and lower molding dies of the injection molding die are spaced apart, the cap plate 121 and the terminal 140 are mounted on the upper molding die or the lower molding die, and the upper and lower molding dies are brought into close contact, the cap plate 121 and the terminal 140 may be inserted and fixed inside the injection molding die.

Referring to FIGS. 3 to 10, the operation of molding an insulator (S160) is an operation of forming the first insulator 180 filling the plurality of first recesses 126 and the plurality of second recesses 146 and interposed between the first uneven surface 125 and the second uneven surface 145 by injecting molten synthetic resin into the injection molding die and curing the synthetic resin.

In the operation of molding an insulator (S160), the plurality of first hook protrusions 184 and the plurality of second hook protrusions 186 may be formed. In addition, by filling the plurality of fine recesses 132 and 152 with the synthetic resin and curing the synthetic resin, the plurality of fine protrusions 188 may be formed.

The operation of removing the cap plate assembly (S170) is an operation of removing the cap plate assembly 120 including the cap plate 121, the terminal 140, and the first insulator 180 from the injection molding die. The upper and lower molding dies of the injection molding die may be separated and the cap plate assembly 120 may be separated and removed from the injection molding die.

The operation of manufacturing a cap plate assembly (S100) may further include an operation of installing a gasket (S140), an operation of welding the coupling protrusion and the current collector (S180), and an operation of welding the coupling protrusion and the terminal (S190).

The operation of installing a gasket (S140) is an operation of installing the gasket 190 on the cap plate 121, prior to the operation of setting the cap plate and the terminal (S150). For example, the gasket 190 may be installed on the cap plate 121 so that the gasket 190 covers an inner peripheral surface 123 of the cap plate through hole 122 and comes into elastic close contact with the inner peripheral surface 123 of the cap plate through hole 122. Since the configuration and function of the gasket 190 has been described with reference to FIG. 3, a redundant description will be omitted.

Meanwhile, the shape of the cavity formed by close contact between the upper molding die and the lower molding die of the injection molding die may correspond to a combined shape of the cap plate 121, the terminal 140, the first insulator 180, the second insulator 196, and the gasket 190.

In this case, when the molten synthetic resin is injected and cured into the inside of the injection molding die in the operation of molding an insulator (S160), the second insulator 196 disposed to be spaced apart from the first insulator 180 with the cap plate 121 therebetween may be formed together with the first insulator 180.

The first insulator 180 and the second insulator 196 may be formed to be spaced apart with the gasket 190 therebetween. The first insulator 180 may be formed to be attached to one side of the gasket 190, and the second insulator 196 may be formed to be attached to the other side of the gasket 190. For example, the first insulator 180 may be attached to a lower end of the gasket pipe portion 191 included in the gasket 190.

The second insulator 196 may be attached to an end of the gasket flange portion 194 included in the gasket 190. The second insulator 196 may be formed to be attached to one side 124 of the cap plate 121 toward the electrode assembly 110. Since the temperature of the molten synthetic resin is lower than the melting temperature of the gasket 190, the gasket 190 may not be melted inside the injection molding die.

Referring to FIGS. 3, 5, and 9, the operation of welding the coupling protrusion and current collector (S180) is an operation of welding the current collector 170 to the coupling protrusion 160, prior to the operation of welding the coupling protrusion and the terminal (S190). More specifically, when the coupling protrusion 160 is inserted into the current collector through hole 174 so that the flange portion 168 of the coupling protrusion 160 is seated in the annular groove 176 and a laser beam is emitted along the edge of the outer peripheral surface of the flange portion 168 and the edge of the inner peripheral surface of the annular groove 176, the annular weld portion 178 may be formed and thus the coupling protrusion 160 and the current collector 170 may be welded.

Referring to FIGS. 3, 5, and 10, the operation of welding the coupling protrusion and the terminal (S190) is an operation of inserting the coupling protrusion 160 to pass through the cap plate 121 and the terminal 140 and welding the coupling protrusion 160 and the terminal 140. More specifically, the coupling protrusion 160 to which the current collector 170 is joined is inserted into the cap plate through hole 122 with the joint portion 162 as a head so that the joint portion 162 is brought into surface contact with the inner peripheral surface of the terminal through hole 143.

In this way, when a laser beam is emitted along the edge of the outer circumferential surface of the joint portion 162 and the edge of the inner peripheral surface of the terminal through hole 143 of the terminal 140 in the state in which the joint portion 162 is in surface contact with the inner peripheral surface of the terminal through hole 143, the annular weld portion 158 may be formed and thus the coupling protrusion 160 and the terminal 140 may be welded. When the coupling protrusion 160 and the terminal 140 are welded, the second insulator 196 may be interposed between the cap plate 121 and the current collector 170.

Referring to FIGS. 2 and 4, the operation of inserting the electrode assembly into the cell case (S200) is an operation of inserting the electrode assembly 110 into the cell case 101 through the openings 105 and 107 formed in the cell case 101. The electrode assembly 110 may be inserted into the cell case 101 through one of the first opening 105 and the second opening 107.

The operation of installing a cap plate assembly (S300) is an operation of installing the cap plate assembly 120 on the cell case 101 to close the openings 105 and 107. A pair of cap plate assemblies 120 may be installed to close the first opening 105 and the second opening 107. In the operation of installing a cap plate assembly (S300), the cap plate 121 may be welded to the peripheries of the openings 105 and 107.

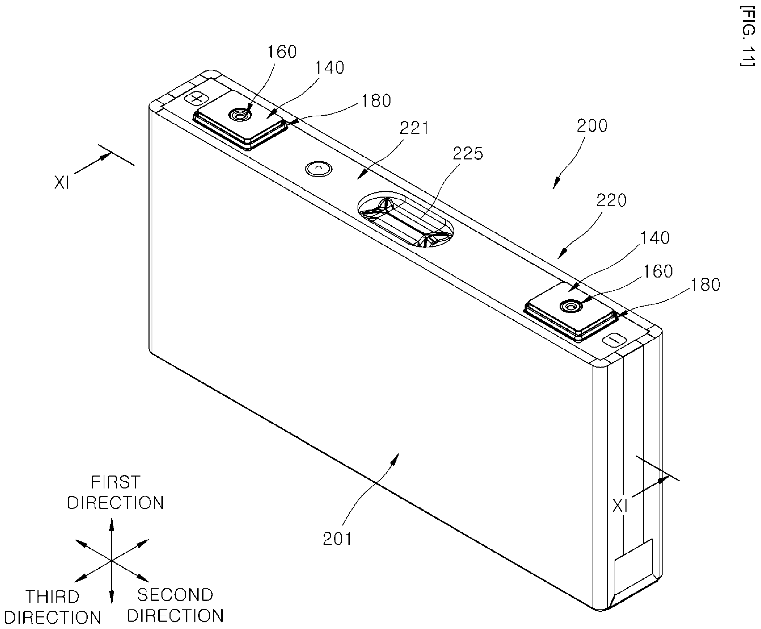

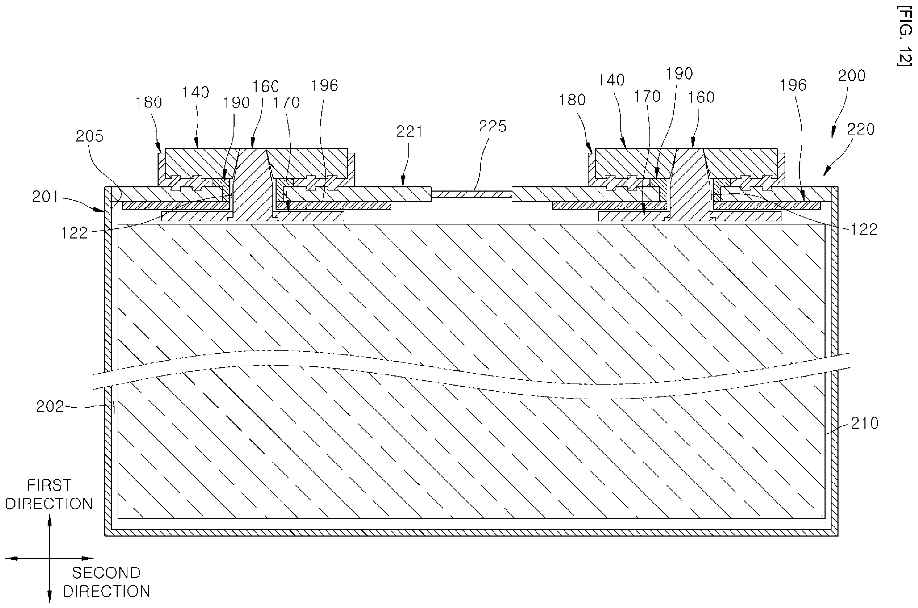

FIG. 11 is a perspective view of a battery cell according to a second embodiment of the present invention, and FIG. 12 is a cross-sectional view taken along line XI-XI in FIG. 11. Referring to FIGS. 11 and 12, a battery cell 200 according to the second embodiment of the present invention includes a cell case 201, an electrode assembly 210, and a cap plate assembly 220.

The cell case 201 is made of a metal material, for example, aluminum alloy, and may be formed in an approximately rectangular parallelepiped shape. An internal space 202 in which the electrode assembly 210 is stored may be formed inside the cell case 201. An opening 205 open in a first direction may be formed in one side of the cell case 201.

The electrode assembly 210 may be accommodated inside the cell case 201. The electrode assembly 210 may enter the internal space 202 of the cell case 201 through the opening 205. The electrode assembly 210 may be formed by winding or stacking a stack of a first electrode plate, a separator, and a second electrode plate, which are formed in a thin plate or film shape. Since the electrode assembly 210 has the same structure as the electrode assembly 110 included in the battery cell 100 according to the first embodiment of the present invention, a redundant description will be omitted.

The cap plate assembly 220 includes a cap plate 221, a terminal 140, a first insulator 180, a coupling protrusion 160, a current collector 170, a gasket 190, a second insulator 196, and a cell vent 225. The cap plate 221 closes the opening 205. An outer edge of the cap plate 221 may be welded to an inner surface of the opening 205 of the cell case 201.

The cap plate 221 may be a plate-shaped member whose planar shape is approximately rectangular and may extend in a second direction perpendicular to the first direction. A pair of cap plate through holes 122 passing through the cap plate 221 in a thickness direction are formed at both ends of the cap plate 221 in a longitudinal direction. The cap plate 221 has a first uneven surface (not illustrated) in which a plurality of first recesses (not illustrated) are formed around the pair of cap plate through holes 122. A plurality of fine recesses (not illustrated) may be formed on the first uneven surface. Since the first uneven surface, the first recesses, and the fine recesses of the cap plate 221 are the same as the first uneven surface 125, the first recesses 126, and the fine recesses 132 of the cap plate assembly 120 according to the first embodiment of the present invention, a redundant description will be omitted.

A pair of terminals 140 of the cap plate assembly 220 are provided. The pair of terminals 140 may be disposed, one at each of both ends of the cap plate 221 in the longitudinal direction to be aligned with the pair of cap plate through holes 122 and spaced apart from each other along the first direction. One of the pair of terminals 140 may be a positive terminal and the other may be a negative terminal.

In the cap plate assembly 220, a pair of first insulators 180, a pair of coupling protrusions 160, a pair of current collectors 170, a pair of gaskets 190, and a pair of second insulators 196 may be each provided in a one-to-one correspondence with a pair of terminals 140.

Since the terminal 140, the first insulator 180, the coupling protrusion 160, the current collector 170, the gasket 190, and the second insulator 196 are denoted by the same reference numerals as the terminal 140, the first insulator 180, the coupling protrusion 160, the current collector 170, the gasket 190, and the second insulator 196 included in the cap plate assembly 120 according to the first embodiment of the present invention and have the same configuration as the mentioned ones, redundant descriptions of the configuration will be omitted.

One current collector 170 of the pair of current collectors 170 may be electrically connected to an uncoated portion of one of the first electrode plate and the second electrode plate of the electrode assembly 210, and the other current collector 170 may be electrically connected to an uncoated portion of the other of the first electrode plate and the second electrode plate of the electrode assembly 210.

The current collector 170 may be directly electrically connected to the uncoated portion by a method such as welding or may be electrically connected to the uncoated portion via a sub plate (not illustrated).

The cell vent 225 may be positioned between the pair of terminals 140 in the cap plate 221. The cell vent 225 may rupture and discharge emissions such as a high-temperature gas or flame material from the inside of the cell case 201 to the outside when the high-temperature gas or flame material is generated inside the cell case 201 due to overcharging, abnormal operation, or the like.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A battery cell comprising:
an electrode assembly;
a cell case in which the electrode assembly is stored and an opening is formed to allow the electrode assembly to enter the cell case; and
a cap plate assembly installed on the cell case to close the opening,
wherein the cap plate assembly includes:
a cap plate having a first uneven surface in which a plurality of first recesses are formed;
a terminal having a second uneven surface in which a plurality of second recesses are formed and which faces the first uneven surface; and
a first insulator filling the plurality of first recesses and the plurality of second recesses and interposed between the first uneven surface and the second uneven surface.

2. The battery cell of claim 1, wherein a size of an inner diameter of an entrance of each of the first recesses is smaller than a size of the greatest inner diameter among sizes of inner diameters of parts other than the entrance of the first recess, and
a size of an inner diameter of an entrance of each of the second recesses is smaller than a size of the greatest inner diameter among sizes of inner diameters of parts other than the entrance of the second recess.

3. The battery cell of claim 1, wherein the first insulator includes:
a plurality of first hook protrusions formed by filling interiors of the plurality of first recesses with molten synthetic resin and curing the synthetic resin; and
a plurality of second hook protrusions formed by filling interiors of the plurality of second recesses with molten synthetic resin and curing the synthetic resin.

4. The battery cell of claim 1, wherein a plurality of fine recesses are formed in at least one of the first uneven surface and the second uneven surface by laser irradiation, and
the first insulator includes a plurality of fine protrusions formed by filling interiors of the plurality of fine recesses with molten synthetic resin and curing the synthetic resin.

5. The battery cell of claim 1, wherein a first through hole is formed in the cap plate,
a second through hole aligned with the first through hole is formed in the terminal, and
the cap plate assembly further includes:
a coupling protrusion electrically coupled to the terminal through the first through hole and the second through hole;
a current collector disposed on a side opposite to the terminal with the cap plate therebetween and electrically coupled to the coupling protrusion; and
a second insulator interposed between the cap plate and the current collector.

6. The battery cell of claim 5, wherein the cap plate assembly further includes a gasket covering an inner peripheral surface of the first through hole and coming into elastic close contact with the inner peripheral surface of the first through hole.

7. The battery cell of claim 5, wherein the coupling protrusion and the terminal are coupled by welding.

8. The battery cell of claim 7, wherein the coupling protrusion includes:
a pillar portion extending from the current collector toward the terminal with a constant diameter; and
a joint portion positioned farther from the current collector than the pillar portion and tapered so that a diameter thereof becomes smaller as a distance from the current collector increases, and
the joint portion is welded to the terminal.

9. The battery cell of claim 8, wherein the second through hole is tapered so that a size of an inner diameter thereof becomes smaller as a distance from the cap plate increases, and
a size of an inclination angle of the tapered joint portion and a size of an inclination angle of the tapered second through hole are the same.

10. The battery cell of claim 8, wherein the coupling protrusion further includes an assembly portion tapered so that a diameter thereof becomes smaller as a distance from the current collector increases between the pillar portion and the joint portion, and
a size of an inclination angle of the tapered joint portion is greater than a size of an inclination angle of the tapered assembly portion.

11. The battery cell of claim 1, wherein a pair of terminals are provided to be spaced apart from each other along a longitudinal direction of the cap plate, and
a pair of insulators are provided in a one-to-one correspondence with the pair of terminals.

12. The battery cell of claim 1, wherein a pair of openings are provided to open in opposite directions in the cell case, and
a pair of cap plate assemblies are provided in a one-to-one correspondence with the pair of openings.

13. The battery cell of claim 1, wherein a pair of terminals are provided to be spaced apart from each other along a longitudinal direction of the cap plate, and
a pair of first insulators are provided in a one-to-one correspondence with the pair of terminals.

14. A method for manufacturing a battery cell, the method comprising:
manufacturing a cap plate assembly;
inserting an electrode assembly into a cell case through an opening formed in the cell case; and
installing the cap plate assembly on the cell case to close the opening,
wherein the manufacturing of the cap plate assembly includes:
preparing a cap plate having a first uneven surface in which a plurality of first recesses are formed;
preparing a terminal having a second uneven surface in which a plurality of second recesses are formed;
setting the cap plate and the terminal by inserting and fixing the cap plate and the terminal into an injection molding die so that the first uneven surface and the second uneven surface are disposed to face each other inside the injection molding die;
molding a first insulator filling the plurality of first recesses and the plurality of second recesses and interposed between the first uneven surface and the second uneven surface by injecting molten synthetic resin into the injection molding die and curing the synthetic resin; and
removing the cap plate assembly including the cap plate, the terminal, and the first insulator from the injection molding die.

15. The method for manufacturing the battery cell of claim 14, wherein the preparing of the cap plate includes:
forming a plurality of first basic grooves with a constant inner diameter from an entrance to a bottom in a surface of the cap plate by press machining; and
forming a first undercut by pressing a periphery of the entrance of each of the plurality of first basic grooves so that a size of the inner diameter of the entrance of each of the plurality of first basic grooves is smaller than a size of an inner diameter of a part other than the entrance of each of the plurality of first basic grooves.

16. The method for manufacturing the battery cell of claim 15, wherein the preparing of the terminal includes:
forming a plurality of second basic grooves with a constant inner diameter from an entrance to a bottom in a surface of the terminal by press machining; and
forming a second undercut by pressing a periphery of the entrance of each of the plurality of second basic grooves so that a size of the inner diameter of the entrance of each of the plurality of second basic grooves is smaller than a size of an inner diameter of a part other than the entrance of each of the plurality of second basic grooves.

17. The method for manufacturing the battery cell of claim 14, wherein the manufacturing of the cap plate assembly further includes forming a plurality of fine recesses by emitting a laser to at least one of the first uneven surface and the second uneven surface, and
in the molding of the insulator, the first insulator is formed to fill the plurality of fine recesses.

18. The method for manufacturing the battery cell of claim 14, wherein the manufacturing of the cap plate assembly further includes:
inserting a coupling protrusion to pass through the cap plate and the terminal and welding the coupling protrusion and the terminal; and
welding a current collector to the coupling protrusion prior to welding the coupling protrusion and the terminal.

19. The method for manufacturing the battery cell of claim 18, wherein in the molding of the insulator, a second insulator disposed to be spaced apart from the first insulator with the cap plate therebetween is formed together with the first insulator.

20. The method for manufacturing the battery cell of claim 19, wherein the manufacturing of the cap plate assembly further includes installing a gasket on the cap plate prior to the setting of the cap plate and the terminal, and
in the molding of the insulator, the first insulator is formed to be attached to one side of the gasket, and the second insulator is formed to be attached to the other side of the gasket.
